# FASCICULE DE BREVET EUROPEEN

(11) **EP 0 703 106 B1**
(45) Date de publication et mention de la délivrance du brevet: **11.11.1998**
(21) Numéro de dépôt: 95402031.9
(22) Date de dépôt: 07.09.1995
(51) Int. Cl.: B60J 1/20

(54) **Agencement de store pare-soleil pour vitre d'un véhicule automobile**
Anordnung eines Sonnenschutzrollos für Kraftfahrzeugfenster
Arrangement of a roller-blind for a window of a motor vehicle

(30) Priorité: 23.09.1994 FR 9411392
(43) Date de publication de la demande: 27.03.1996
(73) Titulaire: AUTOMOBILES PEUGEOT, 75116 Paris (FR); AUTOMOBILES CITROEN, 92200 Neuilly-sur-Seine (FR)
(72) Inventeur: Jouanny, Thierry, F-92250 La Garenne Colombes (FR)
(74) Mandataire: Berger, Helmut

(56) Documents cités:
- EP-A- 0 410 687
- US-A- 5 085 473

## Description

L'invention concerne un agencement de store pare-soleil pour vitre d'un véhicule automobile (Agencement révélé par EP-A-0 694 424, bénéficiant d'une date de priorité (29.07.94) antérieure à celle du présent brevet, mais publiée postérieurement à la date de priorité du présent brevet), ayant un bord latéral incliné, du type comprenant un store déroulable entre une position repliée de dégagement de la vitre et une position dépliée de recouvrement de la vitre et présentant une forme adaptée au contour de celle-ci, moins large dans le haut que dans le bas de la vitre de façon a comporter, au niveau du bord incliné de celle-ci une partie sensiblement triangulaire, et une barre de maintien du store à l'état replié, qui est fixée à l'extrémité supérieure plus étroite du store et susceptible d'être fixée amoviblement dans sa position de maintien, ainsi qu'une deuxième barre articulée à la barre de maintien au niveau de l'angle formé par les bords supérieur et incliné de la vitre, de façon pivotante entre une position de rangement et une position inclinée vers le bas sensiblement parallèle à l'inclinaison dudit bord latéral incliné de la vitre.

Jusqu'à présent aucun agencement de maintien du store n'a été proposé, qui résout de façon satisfaisante le problème que pose la partie triangulaire du store notamment dans le cas de vitres mobiles. Les agencements connus ne permettent pas de tenir cette partie pour éviter des battements du store et du bruit lorsque la vitre se déplace.

La présente invention a pour but de proposer un agencement de store qui pallie cet inconvénient.

Pour atteindre ce but, l'agencement selon l'invention comprend des moyens d'accrochage amovible de la partie triangulaire du store à cette barre pivotante, adaptés pour que le store soit accroché à ou décroché de la barre selon que le store est à l'état déplié ou replié.

Par la document EP-A-0 694 424 est déjà connu un agencement comportant une barre de maintien du store, formé par deux barres, la dernière étant articulée, de façon pivotante, à la première et la partie inclinée du store accrochée à la barre pivotante. Or, l'accrochage est effectué à l'aide d'une corde et d'un ressort de rappel, disposé à l'intérieur des barres, ainsi que d'un ressort disposé au niveau de l'articulation celles-ci.

Or, le document EP-A-0 694 424 appartient à l'état de la technique visé à l'article 54(3) et (4) CBE, et n'est donc opposable qu'à titre de la nouveauté. Par conséquent puisque les moyens d'accrochage sont différents de ceux énoncés dans la revendication 1 cette dernière est donc brevetable par rapport au document EP-A-0 694 424.

D'autres modes de réalisation de l'invention font les objets de revendications dépendantes.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
La figure 1 montre une porte arrière d'un véhicule automobile, qui est équipé d'un agencement de store selon l'invention, montré à l'état déplié.
Les figures 2a et 2b montrent, à plus grande échelle, le dispositif des barres dans la zone II de la figure 1, à l'état de rangement et à l'état de maintien du store à l'état déplié.
Les figures 3a et 3b montrent deux modes de réalisation de l'accrochage du store à la barre pivotante dans la zone III de la figure 1.

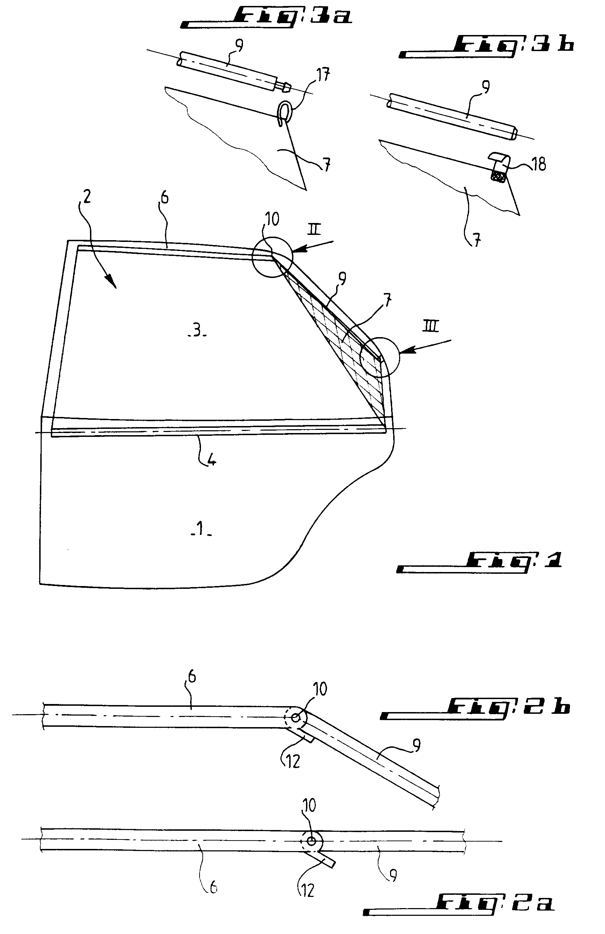

La figure 1 montre une porte arrière d'un véhicule automobile qui est équipé d'un agencement de store paresoleil 2 selon l'invention. L'agencement comprend un store 3 dont la forme à l'état déplié recouvre la surface vitrée totale de la porte. Par conséquent le contour du store correspond à celui de la vitre. La figure 1 montre l'agencement dans cet état déplié. A l'état replié, le store est stocké, avantageusement à l'état enroulé, en haut et le long du panneau 1 de la porte comme cela est indiqué en 4.

On constate sur la figure 1 que l'extrémité supérieure, à l'état déplié du store, est moins large que le store dans la zone de rangement. Dans sa position dépliée, le store est maintenu à l'aide d'une barre de maintien 6 qui est fixée à l'extrémité supérieure du store et est accrochée amoviblement, de toute manière appropriée connue, en haut sur la vitre ou sur la porte. La longueur de la barre 6 correspond à la largeur du store. On comprend aisément que c'est la tenue de la partie hachurée 7, de forme triangulaire, du store qui est problématique.

Pour résoudre ce problème, l'agencement comprend une deuxième barre 9 qui est articulée en 10 à l'extrémité de la barre de maintien 6, c'est-à-dire au niveau de l'angle supérieur de la partie triangulaire 7. La barre 9 est susceptible de pivoter entre une position représentée sur la figure 2a, dans laquelle elle est axialement alignée avec la barre de maintien 6 et la position inclinée montrée sur les figures 1 et 2b. L'inclinaison de la barre 9 correspond à l'inclinaison du bord de la vitre. Le pivotement vers le bas de la barre 9 est limité par une patte de butée 12 solidaire de l'extrémité 10 de la barre de maintien 6. Dans la position alignée, les deux barres 6 et 9 obturent partiellement la fente de passage du store hors de son logement de rangement 4.

Comme on le voit sur les figures 3a et 3b, l'angle libre de la partie triangulaire 7 du store est pourvu d'un oeillet 17 (figure 3a) ou d'un crochet 18 (du type à bande auto-grippante), permettant l'accrochage de la partie triangulaire à l'extrémité libre de la barre pivotante 9. Cet accrochage se fait lorsque le store est déplié et la barre de maintien 6 fixée en haut de la porte. Après l'accrochage, le store est tendu sous l'effet par exemple de l'enrouleur qui est avantageusement prévu pour engendrer une force de rappel du store dans son logement. Ainsi l'agencement devient suffisamment rigide pour ne pas entraîner des battements du store et des bruits lors du déplacement du véhicule. Etant donné que les deux barres 6 et 9 ont le contour exact du vitrage, toute la surface vitrée est recouverte par le store.

## Revendications

1. Agencement de store pare-soleil pour vitre de véhicule automobile, ayant un bord latéral incliné, du type comprenant un store déroulable entre une position repliée de dégagement de la vitre et une position dépliée de recouvrement de la vitre, et présentant une forme adaptée au contour de celle-ci, moins large dans le haut que dans le bas de la vitre, de façon à comporter au niveau du bord incliné de celle-ci une partie sensiblement triangulaire, une barre de maintien du store à l'état replié, qui est fixée à l'extrémité supérieure plus étroite du store et susceptible d'être fixée amoviblement dans sa position de maintien, ainsi qu'une deuxième barre (9) articulée à ladite barre de maintien (6) au niveau de l'angle (en 10) formé par les bords supérieur et incliné de la vitre, de façon pivotante entre une position de rangement et une position inclinée vers le bas sensiblement parallèle à l'inclinaison dudit bord latéral incliné de la vitre, et des moyens d'accrochage amovible (17, 18) de la partie triangulaire du store à cette barre pivotante (9), adaptés pour que le store soit accroché à ou décroché de la barre selon que le store est à l'état déplié ou replié.

2. Agencement selon la revendication 1, caractérisé en ce que la barre pivotante (9) est alignée avec la barre de maintien (6), dans sa position de rangement précitée et obture dans cette position la fente de passage du store (3) hors de son logement (4).

3. Agencement selon l'une des revendications 1 ou 2, caractérisé en ce qu'un organe de limitation (12) du pivotement de la barre (9) est fixé à l'extrémité d'articulation (10) de la barre de maintien (6).

4. Agencement selon l'une des revendications précédentes, pourvu d'un enrouleur de store, caractérisé en ce que le store (3) est maintenu sous tension, à l'état déplié et accroché aux barres de maintien (6) et pivotante (9), sous l'effet de la force de rappel de l'enrouleur.

5. Agencement selon l'une des revendications 1 à 4, caractérisé en ce que l'angle libre de la partie triangulaire (7) du store est pourvu d'un oeillet (17) ou crochet (18) susceptible d'être amoviblement accroché à l'extrémité libre de la barre pivotante (9).

## Claims

1. Arrangement of a sunshade blind for an automotive vehicle glass pane, having an inclined side edge, of the type comprising a blind which may be unrolled between a folded back position of clearing the glass pane and an unfolded position of covering the glass pane and exhibiting a shape adapted to the outline of the latter, less wide at the top than at the bottom of the glass pane, so as to comprise at the level of the inclined edge thereof, a substantially triangular portion, a bar for holding the blind in the folded back state, which is fastened at the upper narrower end of the blind and capable of being removably fastened in its holding position as well as a second bar (9) pivotally connected to the said holding bar (6) at the level of the angle (at 10) constituted by the upper and inclined edge of the glass pane, in a pivoting manner between a stowed away position and a downwards inclined position substantially parallel to the incline of the said inclined edge of the glass pane and means (17,18) for removably hooking the triangular portion of the blind onto that pivoting bar (9), adapted in order that the blind be hooked onto or unhooked from the bar according as the blind is in the unfolded or folded state.

2. Arrangement according to claim 1, characterized in that the pivoting bar (9) is aligned with the holding bar (6) in its aforesaid stowed away position and closes in this position the slot for the passage of the blind (3) out of its housing (4).

3. Arrangement according to one of claims 1 or 2, characterized in that a member (12) for limiting the pivoting of the bar (9) is fastened at the pivotal connection end (10) of the holding bar (6).

4. Arrangement according to one of the foregoing claims, provided with a blind winding system, characterized in that the blind (3) is kept under tension in the unfolded state and hooked onto the holding bar (6) and pivoting bar (9), under the effect of the return force of the winding system.

5. Arrangement according to one of claims 1 to 4, characterized in that the free angle of the triangular portion (7) of the blind is provided with an eyelet (17) or hook (18) capable of being removably hooked onto the free end of the pivoting bar (9).

## Patentansprüche

1. Anordnung eines einen geneigten Seitenrand aufweisenden eine Sonnenblende bildenden Vorhanges für ein Kraftfahrzeugfenster, derjenigen Gattung mit einem zwischen einer zurückgefalteten, das Fenster freilegenden Stellung und einer das Fenster abdeckenden entfalteten Stellung abwickelbaren Vorhang, der eine an den Umriß des Fensters angepaßte Gestalt, weniger breit am oberen Teil als am unteren Teil des Fensters aufweist, um in der Höhe des geneigten Randes desselben einen etwa dreieckigen Teil aufzuweisen, einer Stange zum Halten des Vorhanges in dem zurückgefalteten Zustand, die am oberen schmaleren Ende des Vorhanges befestigt ist und fähig ist, in ihrer Haltestellung abnehmbar befestigt zu werden, sowie einer zweiten Stange (9), die an der besagten Haltestange (6) in der Höhe des (bei 10) durch den oberen und den unteren Rand des Fensters gebildeten Winkels angelenkt ist, um zwischen einer Wegräumungsstellung und einer etwa parallel zu der Neigung des besagten Seitenrandes des Fensters nach unten geneigten Stellung verschwenkbar zu sein und abnehmbaren Mitteln (17, 18) zum Anhängen des dreieckigen Teiles des Vorhanges an dieser Schwenkstange (9), die angepaßt sind, damit der Vorhang an die Stange angehängt wird oder von dieser abgehängt wird, je nachdem der Vorhang in dem entfalteten oder zusammengefalteten Zustand ist.

2. Anordnung nach Anspruch 1, dadurch gekennzeichnet, daß die schwenkbare Stange (9) mit der Haltestange (6) in ihrer vorgenannten Wegräumungsstellung fluchtend ausgerichtet ist und in dieser Stellung den Schlitz zum Durchgang des Vorhanges (3) aus seinem Unterbringungsraum (4) verschließt.

3. Anordnung nach einem der Ansprüche 1 oder 2, dadurch gekennzeichnet, daß ein Glied (12) zur Begrenzung der Schwenkbewegung der Stange (9) an dem Anlenkungsende (10) der Haltestange (6) befestigt ist.

4. Mit einer Vorhangsaufwickelvorrichtung versehene Anordnung gemäß einem der vorangehenden Ansprüche, dadurch gekennzeichnet, daß der Vorhang (3) in dem entfalteten und an der Haltestange (6) und an der schwenkbaren Stange (9) unter der Wirkung der Rückstellkraft der Aufwickelvorrichtung unter Spannung gehalten wird.

5. Anordnung nach einem der Ansprüche 1 bis 4, dadurch gekennzeichnet, daß der freie Winkel des dreieckigen Teiles (7) des Vorhanges mit einer Öse (17) bzw. einem Haken (18) versehen ist, die bzw. der fähig ist, an dem freien Ende der schwenkbaren Stange (9) abnehmbar angehängt zu werden.
